# EUROPÄISCHE PATENTSCHRIFT

(11) **EP 4 176 185 B1**
(45) Veröffentlichungstag und Bekanntmachung des Hinweises auf die Patenterteilung: **04.12.2024**
(21) Anmeldenummer: 21820115.0
(22) Anmeldetag: 09.06.2021
(51) Int. Cl.: F16H 57/021, F16H 57/031, F16H 57/04

(54) **GETRIEBE MIT EINER WELLE, ZUMINDEST EINEM ERSTEN LAGER, EINEM GEHÄUSETEIL UND EINEM DECKEL**
TRANSMISSION WITH A SHAFT, AT LEAST ONE FIRST BEARING, A HOUSING PART, AND A COVER
TRANSMISSION COMPRENANT UN ARBRE, AU MOINS UN PREMIER PALIER, UNE PARTIE CARTER ET UN COUVERCLE

(30) Priorität: 01.07.2020 CN 202010621077; 22.07.2020 DE 102020004407
(43) Veröffentlichungstag der Anmeldung: 10.05.2023
(73) Patentinhaber: SEW-EURODRIVE GmbH & Co. KG, 76646 Bruchsal (DE)
(72) Erfinder: WU, Zili, Tianjin 300060 (CN)
(86) Internationale Anmeldenummer: PCT/EP2021/025203
(87) Internationale Veröffentlichungsnummer: WO 2022/002432

(56) Entgegenhaltungen:
- WO-A1-2020/192964
- CN-U- 203 685 659
- CN-U- 206 889 640
- CN-U- 207 111 896
- CN-U- 207 278 846

## Beschreibung

Die Erfindung betrifft ein Getriebe mit einer Welle, zumindest einem ersten Lager, einem Gehäuseteil und einem Deckel.

Aus der CN 2 07 278 846 U ist ein Getriebe bekannt. Dabei ist bekannt, dass bei dem Getriebe eine Welle über in einem Gehäuseteil des Getriebes aufgenommene Lager drehbar gelagert ist.

Aus der DE 29 23 507 A1 ist eine Vorrichtung bei Mahlapparaten für lignosezellulosehaltiges Gut bekannt.

Aus der WO 2015 / 185 484 A1 ist eine Vorrichtung zum Schmieren eines Wälzlagers eines Elektromotors bekannt.

Aus der CN 1 06 641 203 A1 ist eine Dichtungsanordnung für eine drehbar gelagerte Welle eines Getriebes bekannt.

**Aus der** CN 207 111 896 U **ist eine Dichtanordnung bekannt.**

### Aus der CN 207 278 846 U ist eine abgedichtete Lageranordnung bekannt.

**Aus der** CN 203 685 659 U **ist eine Lageranordnung mit Labyrinthdichtung bekannt.**

**Aus der** CN 206 889 640 U **ist als nächstliegender Stand der Technik eine Dichtanordnung mit einer Labyrinthdichtung bekannt.**

### Aus der WO 2020/192 964 A1 ist ein Getriebe bekannt.

Der Erfindung liegt daher die Aufgabe zugrunde, ein Getriebe umweltschonend auszubilden.

Erfindungsgemäß wird die Aufgabe bei dem Getriebe nach den in Anspruch 1 angegebenen Merkmalen gelöst.

Wichtige Merkmale der Erfindung bei dem Getriebe mit einer Welle, zumindest einem ersten Lager, einem Gehäuseteil und einem Deckel,
wobei die Welle zumindest über das erste Lager drehbar gelagert ist,
wobei das erste Lager einen Innenring aufweist, der auf die Welle aufgeschoben ist,
wobei der Deckel mit dem Gehäuseteil verbunden ist, insbesondere mittels Schrauben,
wobei die Welle einen Gewindebereich aufweist, auf den eine Mutter aufgeschraubt ist, insbesondere zum Einstellen einer Lagerspannung,
wobei zwischen der Mutter und dem Innenring eine Distanzhülse und eine Scheibe angeordnet ist,
   - wobei der größte Außendurchmesser der Scheibe größer als der größte Außendurchmesser der Distanzhülse ist
   - wobei der größte auf die Drehachse der Welle bezogene Radialabstand der Scheibe größer als der größte auf die Drehachse der Welle bezogene Radialabstand der Distanzhülse ist
   - und/oder wobei der von der Scheibe überdeckte, auf die Drehachse der Welle bezogene Radialabstandsbereich den von der Distanzhülse überdeckten Radialabstandsbereich, insbesondere echt, enthält.

Von Vorteil ist dabei, dass eine reibungsfreie Abdichtung an der abtreibenden Seite des Getriebes ermöglicht ist. Somit ist das Getriebe mit geringer Verlustleistung ausbildbar, was Ressourcen, insbesondere Energieverbrauch, und Umwelt schont. Außerdem ist ein Austreten von Schmieröl verhindert, was ebenfalls die Umwelt schont und schützt. Denn die Scheibe verhindert einerseits aus dem ersten Lager austretendes Öl sich in Richtung der Welle auszubreiten, so dass ein Abfließen durch den Kanal bewirkt wird, und außerdem verhindert die Scheibe, dass Öl adhäsiv an der Welle anhaftend zur Abtriebsseite herausfließt, weil die Scheibe bei Drehbewegung der Welle und somit auch Drehbewegung der mit der Welle drehfest verbundenen Scheibe als Schleuderkante wirkt und das Öl derart abschleudert, dass das abgeschleuderte Öl an der Innenwandung des Deckels entlang zum Kanal geführt wird und von dort rückgeführt wird zum Ölsumpf. Bei Nichtdrehung wirkt die Scheibe als Abtropfkante und bewirkt auch so die Zuführung zum Kanal und somit zur Rückführung in den Ölsumpf.

Daher energetische und stoffliche Emissionen vermindert oder verhindert, was die Umwelt schützt.

Die Zwischenordnung einer Distanzhülse zwischen die Scheibe und den Innenring des ersten Lagers ermöglicht, dass die Scheibe sehr schmal, also mit wenig Masse und somit Trägheitsmoment, ausführbar ist und die Distanzhülse mit einem sehr geringen Außendurchmesser. Dadurch ist es ermöglicht, dass das aus dem ersten Lager herausfließende Öl sich im Bereich axial zwischen der Scheibe und dem Innenring ansammelt und dann aus diesem ringförmigen Bereich über den Kanal zum Ölsumpf des Innenraumbereichs hinabfließt.

Somit wird also die Lagerspannung von der auf die Welle aufgeschraubten Mutter erzeugt und/oder fixiert, wobei die Scheibe beim Erzeugen der Lagerspannung eingeklemmt wird. Anders ausgedrückt, wird mit dem Aufschrauben der Mutter auf die Welle nicht nur die Lagerspannung, sondern auch die Befestigungskraft für die Scheibe erzeugt. Bei höherer Lagerspannung ist auch die Scheibe fester gehalten als bei niedrigerer Lagerspannung.

**Unter echtem Enthalten wird hierbei das Enthalten als echte Teilmenge verstanden. Somit ist der von der Distanzhülse überdeckte Radialabstandsbereich dann eine echte Teilmenge des von der Scheibe überdeckten, auf die Drehachse der Welle bezogenen Radialabstandsbereichs.**

Bei einer vorteilhaften Ausgestaltung ist die Scheibe axial zwischen der Mutter und der Distanzhülse angeordnet. Von Vorteil ist dabei, dass die Mutter direkt auf die Scheibe drückt und diese dann die Kraft über die Distanzhülse an den Innenring weiterleitet.

Bei einer vorteilhaften Ausgestaltung liegt die Distanzhülse am Innenring des ersten Lagers an. Von Vorteil ist dabei, dass im Wesentlichen nur in axialer Richtung auf den Innenring gedrückt wird.

Bei einer vorteilhaften Ausgestaltung ist die Distanzhülse axial zwischen der Scheibe und dem Innenring des ersten Lagers angeordnet. Von Vorteil ist dabei, dass das Öl sich im von der Distanzhülse überdeckten axialen Bereich ansammelt und dann über den Kanal abfließt.

Bei einer vorteilhaften Ausgestaltung ist mittels der Mutter die Lagerspannung der das erste Lager aufweisenden Lageranordnung der Welle eingestellt,
insbesondere wobei die Lageranordnung ein zweites Lager aufweist. Von Vorteil ist dabei,
dass die in der Lagerung vorgesehene Lagerspannung mittels der auf die welle aufgeschraubten Mutter einstellbar ist. Vorzugsweise weist die Mutter Mittel zum kraftschlüssigen Verspannen der Mutter an dem Gewindebereich der Welle auf. Somit ist ein Zurückschrauben der Mutter verhinderbar und die Lagerspannung fixierbar. Hierzu weist die Mutter an ihrer Außenseite und an ihrer Innenseite Schlitze und/oder Nuten auf, so dass durch diese durchgeführte, axial gerichtete Schrauben Bereiche der Mutter zueinander hindrücken und dabei die fixierungserzeugende Verspannung der Mutter am Schraubgewinde bewirken.

Die Scheibe ragt in einen ringförmigen Raumbereich hinein, der über einen Kanal mit einem Innenraumbereich des Getriebes, insbesondere mit einem Verzahnungsteil und einen Ölsumpf des Getriebes umfassenden Innenraumbereich des Getriebes, verbunden ist. Von Vorteil ist dabei, dass das aus dem ersten Lager austretende Öl über den Kanal abgeleitet und zurückgeleitet wird in den Ölsumpf. Weil das den Kanal durchströmende Öl dabei am Deckel entlangströmt, ist eine Kühlung des Deckels und somit auch der mit dem Deckel verbundenen Teile erreichbar.

Bei einer vorteilhaften Ausgestaltung ist der ringförmige Raumbereich begrenzt durch das erste Lager, insbesondere durch den Innenring, die Wälzkörper und den Außenring des ersten Lagers, sowie durch die Mutter, die Scheibe, die Distanzhülse und den Deckel. Von Vorteil ist dabei, dass eine einfache Herstellung ermöglicht ist, indem am Deckel eine Ausnehmung ausgeformt wird.

**Erfindungsgemäß** umfasst der Kanal
- einen ersten Raumbereich, insbesondere Ausnehmung, der durch den Deckel, eine Ablassschraube sowie das Gehäuseteil begrenzt ist, und
- einen zweiten Raumbereich, der durch das Gehäuseteil hindurchgeht und einerseits in den Innenraumbereich des Getriebes mündet und andererseits in den ersten Raumbereich,
wobei der erste Raumbereich in den ringförmigen Raumbereich mündet. Von Vorteil ist dabei, dass eine einfache Herstellung durch geeignete Ausformung des Deckels und des Gehäuseteils ermöglicht ist.

Bei einer vorteilhaften Ausgestaltung ist zwischen der Mutter und dem Deckel ein Ringspalt ausgebildet,
insbesondere wobei die Mutter drehfest mit der Welle verbunden ist. Von Vorteil ist dabei, dass die Mutter mit der Welle drehfest verbunden ist und der Deckel drehfest mit dem Gehäuseteil verbunden ist.

Bei einer vorteilhaften Ausgestaltung ist ein Ring auf die Welle aufgesteckt und mit der Welle kraftschlüssig verbunden, insbesondere thermisch aufgeschrumpft verbunden ist,
wobei die Mutter axial, insbesondere also in axialer Richtung und/oder also in Richtung der Drehachse der Welle, zwischen dem Ring und dem ersten Lager angeordnet ist. Von Vorteil ist dabei, dass der Ring in einfacher Weise öldicht verbindbar ist mit der Welle.

Bei einer vorteilhaften Ausgestaltung ist eine Labyrinthscheibe insbesondere mittels Schrauben mit dem Ring verbunden,
insbesondere deren in Umfangsrichtung umlaufende, zur Drehachse der Welle koaxial ausgerichtete Ringnuten zusammen mit dazu korrespondierenden, am Deckel eingebrachten, in Umfangsrichtung umlaufenden, zur Drehachse der Welle koaxial ausgerichteten Ringnuten einen Labyrinthspalt bilden. Von Vorteil ist dabei, dass die Sicherheit gegen austretendes Öl erhöht ist. Somit ist der Umweltschutz, also der Schutz der Umgebung eines Getriebes gegen Austreten von Schall, Energie oder Stoffen, insbesondere Öl, verbessert.

Bei einer vorteilhaften Ausgestaltung sind zwischen dem Ring und dem Deckel eine Hauptkammer und zwei von der Hauptkammer beabstandete Kammern ausgebildet,
wobei die Hauptkammer axial zwischen den beiden Kammern angeordnet ist,
wobei zwischen dem Ring und dem Deckel ein Ringspalt ausgebildet ist, welcher die Hauptkammer mit den beiden Kammern verbindet. Von Vorteil ist dabei, dass eine Druckminderung erreichbar ist.

Bei einer vorteilhaften Ausgestaltung ist am Ring eine Erhebung, insbesondere ein lokales Maximum des von der axialen Position abhängigen Außendurchmessers des Rings, ausgebildet,
wobei die Erhebung in die Hauptkammer hineinragt,
insbesondere wobei der von der Hauptkammer überdeckte axiale Bereich den von der Erhebung überdeckten axialen Bereich umfasst und/oder echt enthält. Von Vorteil ist dabei, dass ein Abschleudern von eventuell austretenden Ölmengen ermöglicht ist.

Dabei ist die Hauptkammer wiederum mit dem Kanal verbunden, so dass auch dieses abgeschleuderte Öl in den Ölsumpf zurückgeführt wird. Somit ist auch hierbei der Umweltschutz verbessert.

Bei einer vorteilhaften Ausgestaltung ist zwischen der Labyrinthdichtung und dem Ring ein Laminarring angeordnet. Von Vorteil ist dabei, dass eine weiter verbesserte Dichtung ausgeführt ist. Somit ist auch hierbei der Umweltschutz verbessert. Die Dichtung ist also schichtweise aufgebaut. Öl, welches wider Erwarten axial zum Abtrieb hin die Scheibe überwindet, wird zumindest an der Erhebung in der Hauptkammer abgeschleudert. Falls wider Erwarten dies nicht passiert, wird das Öl vom Laminarring abgehalten und wenn auch dies nicht erreicht wird von der Labyrinth-Dichtung.

Bei einer vorteilhaften Ausgestaltung ist die radiale Wandstärke der Mutter größer als die radiale Wandstärke der Distanzhülse. Von Vorteil ist dabei, dass Material einsparbar ist und der Bereich zur Ableitung des Öls möglichst groß ausgeführt ist.

Bei einer vorteilhaften Ausgestaltung ist der insbesondere aus drei Stücken bestehende Laminarring in einer in Umfangsrichtung umlaufenden Ringnut der Labyrinthscheibe angeordnet,
insbesondere wobei die radial äußere Oberfläche des Laminarrings den Deckel berührt. Von Vorteil ist dabei, dass eine besonders wirksame Abdichtung erreichbar ist. Somit ist der Umweltschutz verbessert.

Bei einer vorteilhaften Ausgestaltung ist zumindest eine Schraube durch die Labyrinthscheibe geführt und ist in eine Gewindebohrung des Rings eingeschraubt,
wobei der von der Schraube in axialer Richtung überdeckte Bereich mit dem von der Hauptkammer in axialer Richtung überdeckten Bereich überlappt,
insbesondere wobei der Kopf der Schraube die Labyrinthscheibe zum Deckel hin drückt. Von Vorteil ist dabei, dass die Schraube aus einem Material geringerer Dichte als das Material
des Rings ausführbar ist. Somit ist ein niedrigeres Trägheitsmoment erreichbar als bei kürzer ausgeführter Schraube und Gewindebohrung.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert;

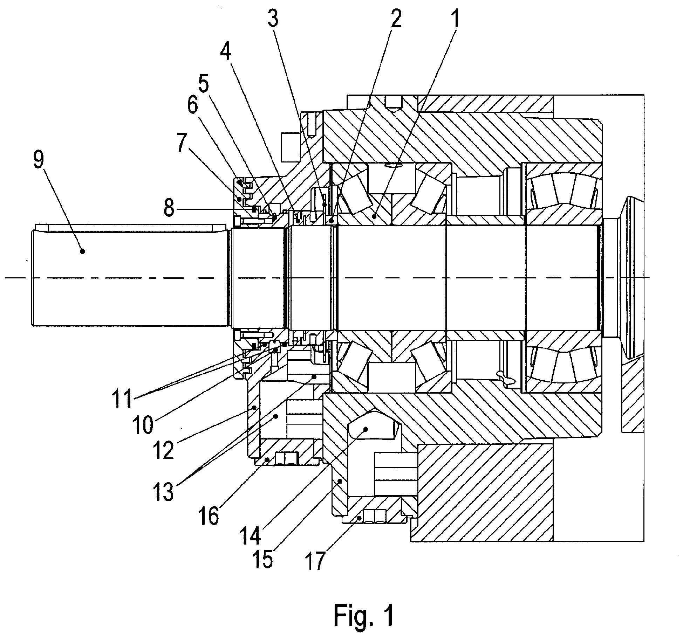

In der Figur 1 ist ein Bereich eines erfindungsgemäßen Getriebes im Längsschnitt dargestellt.

Wie in der Figur 1 gezeigt, ist eine Welle 9, insbesondere Vollwelle oder Hohlwelle, über Lager drehbar gelagert, welche in einem Gehäuseteil 15 aufgenommen sind.

Die Welle 9 ist vorzugsweise eine Antriebswelle des Getriebes und ragt aus dem das Gehäuseteil 15 umfassenden Gehäuse heraus.

Der Innenring 1 eines ersten der Lager ist auf die Welle aufgeschoben und kraftschlüssig mit der Welle 15 verbunden.

Die Lager sind als Schräglager ausgeführt, insbesondere jeweils als Doppellager oder zweireihiges Lager.

Zum Einstellen der Lagerspannung ist auf die Welle 9 eine Mutter 4 aufgeschraubt, welche über eine auf die Welle 9 aufgesteckte und axial zwischen dem Innenring 1 des ersten Lagers und der Mutter 4 angeordnete Distanzhülse 2 und eine ebenfalls auf die Welle 9 aufgesteckte und zwischen der Mutter 4 und der Distanzhülse 2 angeordnete Scheibe 3 auf den Innenring 1 drückt, insbesondere und somit die Lagerspannung bewirkt.

Die Scheibe 3 ist radial weiter ausgedehnt als die Mutter 4 und als die Distanzhülse 2. Die Scheibe 3 überdeckt also einen Radialabstandsbereich, welcher den von der Mutter 4 überdeckten Radialabstandsbereich enthält, und/oder die Scheibe 3 überdeckt also einen Radialabstandsbereich, welcher den von der Distanzhülse überdeckten Radialabstandsbereich enthält. Durch dieses radiale Hervorstehen der Scheibe 3 ist verhindert, dass das den Wälzkörper schmierende Öl vom Innenring 1 zur Mutter 4 hinfließt.

Die Mutter 4 ist als Spannmutter ausführbar, wobei sie an ihrer radialen Außenseite und an ihrer radialen Innenseite jeweils zumindest eine in Umfangsrichtung umlaufende Nut und/oder Schlitz aufweist und Schrauben, welche axial durch die Nut oder den Schlitz voneinander beabstandete axiale Bereiche aufeinander zu drücken. Somit ist dann eine Arretierung oder

Fixierung an demjenigen Schraubgewindebereich der Welle 9 ermöglicht, auf den die Mutter 4 aufgeschraubt ist.

Zur Abdeckung des ersten Lagers ist ein Deckel 12 mit dem Gehäuseteil 15 verbunden. Der vom Deckel 12 überdeckte Radialabstandsbereich enthält den vom ersten Lager, insbesondere also von dessen Außenring, Wälzkörpern und Innenring 1, überdeckten Radialabstandsbereich.

Der Deckel 12 ist mittels Schrauben und einem Dichtmittel, insbesondere Flachdichtung und/oder O-Ring, mit dem Gehäuseteil 15 dicht verbunden.

Der Radialabstand, die axiale Richtung und die Umfangsrichtung beziehen sich hier immer auf die Drehachse der Welle 9.

Die Scheibe 3 ragt radial in eine Ausnehmung des Deckels 12 hinein, welche begrenzt ist durch den Deckel 12, die Distanzhülse 2, das Gehäuseteil 15 und das erste Lager, insbesondere durch den Innenring 1, den Außenring und die Wälzkörper des ersten Lagers.

In diese kammerartig ausgeformte Ausnehmung tritt das aus dem ersten Lager austretende Öl ein und wird über einen Kanal in den Ölsumpf des Getriebes zurückgeführt. Der Kanal ist aus einer Ausnehmung 13, die in den Deckel 12, insbesondere von der Unterseite des Deckels 12 her in den Deckel 12 eingebracht ist und andererseits in eine Ausnehmung 14, die ins Gehäuseteil 15 eingebracht ist. Diese Ausnehmung 14 ist durch das Gehäuseteil durchgehend ausgeführt und mündet somit in den Innenraum des Getriebes, insbesondere so, dass das Öl in den Ölsumpf des Getriebes rückführbar ist.

Eine in eine von der Umgebung her durch das Gehäuseteil 15 durchgehende Gewindebohrung des Gehäuseteils 15 eingeschraubte Ablassschraube verschließt die Ausnehmung 14 zur Umgebung hin.

Eine in eine von der Umgebung her durch den Deckel 12 durchgehende Gewindebohrung des Deckels 12 eingeschraubte Ablassschraube verschließt die Ausnehmung 13 zur Umgebung hin. Somit ist bei einer Wartung sich in den Ausnehmungen 13 und 14 ansammelndes Öl in einfacher Weise ablassbar.

Die Scheibe 3 ist zwischen der Mutter 4 und der Distanzhülse 2 eingeklemmt. Da die Scheibe 3 radial an der Distanzhülse hervorsteht und auf der vom ersten Lager abgewandten Seite der Distanzhülse 2 angeordnet ist, wird das vom ersten Lager austretende Öl von der Mutter 4 abgehalten und über den nach unten führenden Kanal zum Ölsumpf hin abgeleitet.

Die Scheibe 3 ist wie auch die Mutter 4 und die Distanzhülse 2 drehfest mit der Welle 9 verbunden. Somit wird an der Scheibe 3 gegebenenfalls anstehendes Öl insbesondere infolge der Zentrifugalkraft abgeschleudert.

Zwischen der Mutter 4 und dem Gehäuseteil 12 ist ein schmaler Spalt. Zur Abtriebsseite hin sind jedoch zur Abdichtung eine Labyrinthdichtung 6 und ein Laminarring 8 angeordnet. Außerdem ist zwischen diesen Dichtungen und der Mutter 4 ein Ring 5 angeordnet.

Dieser Ring 5 weist eine Ringnut auf, deren Nutboden eine nach radial außen gerichtete Erhebung aufweist. Diese Ringnut ist also derart gefertigt, dass die Nuttiefe in axialer Richtung ein lokales Minimum aufweist. Auf diese Weise ist somit ein Abschleudern von Öl ermöglicht, da die Erhebung als Schleuderkante fungiert. Das hierbei abgeschleuderte Öl wird in eine Hauptkammer 10 geschleudert, welche in Umfangsrichtung umlaufend ausgeformt ist, indem in dem Deckel 12 eine in Umfangsrichtung umlaufende Innennut eingebracht ist.

Axial vor und hinter dieser Innennut ist jeweils eine weitere Innennut angebracht, so dass entsprechende Kammern 11 ausgebildet sind, welche durch den Deckel 12 und die Welle 9 jeweils begrenzt sind. Diese Kammern 11 dienen der Druckminderung.

Die Hauptkammer 10 ist an ihrem zu der Ablassschraube 16 zugewandten Endbereich mit dem Kanal verbunden, indem eine Ausnehmung, welche durch den Deckel 12 durchgeht, einerseits in die Ausnehmung 13 mündet und andererseits in die Hauptkammer 10 mündet. Diese Ausnehmung ist vorzugsweise als insbesondere radial gerichtete Stufenbohrung ausgeführt.

Die Hauptkammer 10 zusammen mit den Kammern 11 ist axial zwischen dem Laminarring 8 und der Mutter 4 angeordnet.

Die Labyrinthdichtung ist aus dem Deckel 12 und der Labyrinthscheibe 7 gebildet. Die Labyrinthscheibe 7 weist in Umfangsrichtung umlaufende, zur Drehachse der Welle 9 konzentrisch und voneinander beabstandet angeordnete Ringnuten auf. Diese Ringnuten sind zum Deckel 12 hin geöffnet. Durch entsprechende am Deckel 12 ausgebildete, ebenfalls in Umfangsrichtung umlaufende, zur Drehachse der Welle 9 konzentrisch und voneinander beabstandet angeordnete Ringnuten ist eine Labyrinthdichtung ausgeformt. Die Labyrinthdichtung erstreckt sich in radialer Richtung. Denn die Ringnuten des Deckels 12 überdecken jeweils denselben axialen Bereich. Ebenso überdecken die an der Labyrinthscheibe 7 ausgeformten Ringnuten jeweils einen identischen weiteren axialen Bereich, der aber mit dem von den Ringnuten des Deckels 12 überdeckten axialen Bereich überlappt.

Der vorzugsweise aus drei Stücken bestehende Laminarring 8 ist in einer in Umfangsrichtung umlaufenden Ringnut der Labyrinthscheibe 7 angeordnet. Die radial äußere Oberfläche des Laminarrings 8 berührt den Deckel 12.

Der Ring 5 ist kraftschlüssig auf der Welle 9 aufgesteckt und/oder verbunden. Hierzu ist ein Temperaturunterschied bei der Herstellung bewirkt und das Aufschieben des Rings 5 mit diesem Temperaturunterschied ausgeführt. Durch dieses Aufschrumpfen ist der Ring 5 kraftschlüssig mit der Welle 9 verbunden.

Die Labyrinthscheibe 7 ist mittels Schrauben mit dem Ring 5 verbunden. Hierzu sind die Schrauben mit ihrem Gewindebereich in jeweilige Gewindebohrungen des Deckels 12 eingeschraubt und der Schraubenkopf der durch die Labyrinthscheibe 7 hindurchragenden, jeweiligen Schraube drückt die Labyrinthscheibe 7 zum Deckel 12 hin. Insbesondere sind die Gewindebohrungen und die Schrauben dabei in axialer Richtung ausgerichtet.

Der Deckel 12 ist mittels Schrauben am Gehäuseteil 15 befestigt.

Die Kammern 11 haben zusammen ein kleineres Volumen als die Hauptkammer 10.

Die Kammern 11 sind jeweils gebildet durch eine in den Deckel 12 eingebrachte in Umfangsrichtung umlaufende Nut, insbesondere Innennut. Die Hauptkammer 10 hingegen ist durch eine die Erhebung aufweisende, in Umfangsrichtung umlaufende, in die Welle 9 eingebrachte Ringnut und eine weitere in den Deckel 12 eingebrachte in Umfangsrichtung umlaufende Nut, insbesondere Innennut, gebildet, Dabei umfasst der von der weiteren Nut in axialer Richtung überdeckte Bereich den von der in die Welle 9 eingebrachten Ringnut in axialer Richtung überdeckten Bereich.

Bei weiteren erfindungsgemäßen Ausführungsbeispielen werden die Lager nicht als Schräglager, sondern als Rollenlager oder auch als andere Wälzlager ausgeführt, die mittels des Öls aus dem Innenraum des Getriebes geschmiert werden.

### Bezugszeichenliste

1 Innenring des ersten Lagers
2 Distanzhülse
3 Scheibe
4 Mutter, insbesondere Spannmutter
5 Ring
6 Labyrinthdichtung
7 Labyrinthscheibe
8 Laminarring
9 Welle, insbesondere Vollwelle oder Hohlwelle
10 Hauptkammer
11 Kammer
12 Deckel
13 Ausnehmung im Deckel 12
14 Ausnehmung im Gehäuseteil 15
15 Gehäuseteil
16 Ablassschraube
17 Ablassschraube

## Patentansprüche

1. Getriebe mit einer Welle (9), zumindest einem ersten Lager, einem Gehäuseteil (15) und einem Deckel (12),
wobei die Welle (9) zumindest über das erste Lager drehbar gelagert ist,
wobei das erste Lager einen Innenring (1) aufweist, der auf die Welle (9) aufgeschoben ist,
wobei der Deckel (12) mit dem Gehäuseteil (15) verbunden ist,
**wobei** die Welle (9) einen Gewindebereich aufweist, auf den eine Mutter (4) aufgeschraubt ist, **welche die Lagerspannung einstellt,**
wobei zwischen der Mutter (4) und dem Innenring (1) eine Distanzhülse (2) und eine Scheibe (3) angeordnet ist,
- wobei der größte Außendurchmesser der Scheibe (3) größer als der größte Außendurchmesser der Distanzhülse (2) ist,
- wobei der größte auf die Drehachse der Welle (9) bezogene Radialabstand der Scheibe (3) größer als der größte auf die Drehachse der Welle (9) bezogene Radialabstand der Distanzhülse (2) ist,
wobei
- **der** von der Scheibe (3) überdeckte, auf die Drehachse der Welle (9) bezogene Radialabstandsbereich den von der Distanzhülse (2) überdeckten Radialabstandsbereich, enthält,
wobei die Mutter (4) über die auf die Welle (9) aufgesteckte und axial zwischen dem Innenring (1) des ersten Lagers und der Mutter (4) angeordnete Distanzhülse (2) und die ebenfalls auf die Welle (9) aufgesteckte und zwischen der Mutter (4) und der Distanzhülse (2) angeordnete Scheibe (3) auf den Innenring (1) drückt,
wobei die Scheibe (3) in einen ringförmigen Raumbereich hineinragt, der über einen Kanal mit einem Innenraumbereich des Getriebes verbunden ist,
und **dadurch gekennzeichnet, dass** der Kanal
- einen ersten Raumbereich, umfasst, der durch den Deckel (12), eine Ablassschraube (16) sowie das Gehäuseteil (15) begrenzt ist,
- und einen zweiten Raumbereich, der durch das Gehäuseteil (15) hindurchgeht und einerseits in den Innenraumbereich des Getriebes mündet und andererseits in den ersten Raumbereich,
wobei der erste Raumbereich in den ringförmigen Raumbereich mündet.

2. Getriebe nach Anspruch 1,
**dadurch gekennzeichnet, dass**
die Scheibe (3) axial zwischen der Mutter (4) und der Distanzhülse (2) angeordnet ist.

3. Getriebe nach einem der vorangegangenen Ansprüche,
**dadurch gekennzeichnet, dass**
die Distanzhülse (2) am Innenring (1) des ersten Lagers anliegt.

4. **Getriebe nach einem der vorangegangenen Ansprüche,**
**dadurch gekennzeichnet, dass**
die Distanzhülse (2) axial zwischen der Scheibe (3) und dem Innenring (1) des ersten Lagers angeordnet ist.

5. Getriebe nach einem der vorangegangenen Ansprüche,
**dadurch gekennzeichnet, dass**
mittels der Mutter (4) die Lagerspannung der das erste Lager aufweisenden Lageranordnung der Welle (9) eingestellt ist.

6. **Getriebe nach Anspruch 5,**
**dadurch gekennzeichnet, dass**
**die Lageranordnung ein zweites Lager aufweist.**

7. Getriebe nach einem der vorangegangenen Ansprüche,
**dadurch gekennzeichnet, dass**
der ringförmige Raumbereich begrenzt ist durch das erste Lager, insbesondere durch den Innenring (1), die Wälzkörper und den Außenring des ersten Lagers, sowie durch die Mutter (4), die Scheibe (3), die Distanzhülse (2) und den Deckel (12).

8. Getriebe nach einem der vorangegangenen Ansprüche,
**dadurch gekennzeichnet, dass**
zwischen der Mutter (4) und dem Deckel (12) ein Ringspalt ausgebildet ist,
insbesondere wobei die Mutter (4) drehfest mit der Welle (9) verbunden ist.

9. Getriebe nach einem der vorangegangenen Ansprüche,
**dadurch gekennzeichnet, dass**
ein Ring (5) auf die Welle (9) aufgesteckt und mit der Welle (9) kraftschlüssig verbunden ist, insbesondere thermisch aufgeschrumpft verbunden ist,
wobei die Mutter (4) axial, also in axialer Richtung, zwischen dem Ring (5) und dem ersten Lager angeordnet ist.

10. Getriebe nach einem der vorangegangenen Ansprüche,
**dadurch gekennzeichnet, dass**
eine Labyrinthscheibe (7) insbesondere mittels Schrauben mit dem Ring (5) verbunden ist,
insbesondere deren in Umfangsrichtung umlaufende, zur Drehachse der Welle (9) koaxial ausgerichtete Ringnuten zusammen mit dazu korrespondierenden, am Deckel (12) eingebrachten, in Umfangsrichtung umlaufenden, zur Drehachse der Welle (9) koaxial ausgerichteten Ringnuten einen Labyrinthspalt bilden.

11. **Getriebe nach einem der vorangegangenen Ansprüche,**
**dadurch gekennzeichnet, dass**
zwischen dem Ring (5) und dem Deckel (12) eine Hauptkammer (10) und zwei von der Hauptkammer (10) beabstandete Kammern (11) ausgebildet sind,
wobei die Hauptkammer (10) axial zwischen den beiden Kammern (11) angeordnet ist,
wobei zwischen dem Ring (5) und dem Deckel (12) ein Ringspalt ausgebildet ist, welcher die Hauptkammer (10) mit den beiden Kammern (11) verbindet.

12. **Getriebe nach einem der vorangegangenen Ansprüche,**
**dadurch gekennzeichnet, dass**
am Ring (5) eine Erhebung, insbesondere ein lokales Maximum des von der axialen Position abhängigen Außendurchmessers des Rings (5), ausgebildet ist,
wobei die Erhebung in die Hauptkammer (10) hineinragt,
insbesondere wobei der von der Hauptkammer (10) überdeckte axiale Bereich den von der Erhebung überdeckten axialen Bereich umfasst.

13. **Getriebe nach einem der vorangegangenen Ansprüche,**
**dadurch gekennzeichnet, dass**
zwischen der Labyrinthdichtung (6) und dem Ring (5) ein Laminarring (8) angeordnet ist, insbesondere derart, dass die Dichtung schichtweise aufgebaut ist,
und/oder dass
die radiale Wandstärke der Mutter (4) größer ist als die radiale Wandstärke der Distanzhülse (2).

14. Getriebe nach einem der vorangegangenen Ansprüche,
**dadurch gekennzeichnet, dass**
der insbesondere aus drei Stücken bestehende Laminarring (8) in einer in Umfangsrichtung umlaufenden Ringnut der Labyrinthscheibe (7) angeordnet ist,
insbesondere wobei die radial äußere Oberfläche des Laminarrings (8) den Deckel (12) berührt.

15. Getriebe nach einem der Ansprüche 12 - 14,
**dadurch gekennzeichnet, dass**
zumindest eine Schraube durch die Labyrinthscheibe (7) geführt ist und in eine Gewindebohrung des Rings (5) eingeschraubt ist,
wobei der von der Schraube in axialer Richtung überdeckte Bereich mit dem von der Hauptkammer (10) in axialer Richtung überdeckten Bereich überlappt,
insbesondere wobei das Material der Schraube eine geringere Dichte als das Material des Rings (5) aufweist,
insbesondere wobei der Kopf der Schraube die Labyrinthscheibe (7) zum Deckel (12) hindrückt.

## Claims

1. A gear unit having a shaft (9), at least a first bearing, a housing part (15) and a cover (12),
wherein the shaft (9) is rotatably mounted at least via the first bearing,
wherein the first bearing has an inner ring (1) which is pushed onto the shaft (9),
wherein the cover (12) is connected to the housing part (15),
wherein the shaft (9) has a threaded region onto which a nut (4) is screwed, which nut adjusts the bearing tension,
wherein between the nut (4) and the inner ring (1) there are arranged a spacer sleeve (2) and a disc (3),
- wherein the greatest external diameter of the disc (3) is greater than the greatest external diameter of the spacer sleeve (2),
- wherein the greatest radial distance of the disc (3) related to the rotational axis of the shaft (9) is greater than the greatest radial distance of the spacer sleeve (2) related to the rotational axis of the shaft (9),
wherein
- the radial distance region covered by the disc (3) and related to the rotational axis of the shaft (9) contains the radial distance region covered by the spacer sleeve (2),
wherein the nut (4) presses onto the inner ring (1) via the spacer sleeve (2), placed onto the shaft (9) and arranged axially between the inner ring (1) of the first bearing and the nut (4), and via the disc (3), likewise placed onto the shaft (9) and arranged between the nut (4) and the spacer sleeve (2),
wherein the disc (3) projects into an annular spatial region connected via a channel to an inner-space region of the gear unit,
and **characterised in that** the channel comprises
- a first spatial region bounded by the cover (12), a drain screw (16) and the housing part (15),
- and a second spatial region which passes through the housing part (15) and on the one hand issues into the inner-space region of the gear unit and on the other hand issues into the first spatial region,
wherein the first spatial region issues into the annular spatial region.

2. A gear unit according to claim 1,
**characterised in that**
the disc (3) is arranged axially between the nut (4) and the spacer sleeve (2).

3. A gear unit according to any one of the preceding claims,
**characterised in that**
the spacer sleeve (2) rests against the inner ring (1) of the first bearing.

4. A gear unit according to any one of the preceding claims,
**characterised in that**
the spacer sleeve (2) is arranged axially between the disc (3) and the inner ring (1) of the first bearing.

5. A gear unit according to any one of the preceding claims.
**characterised in that**
the bearing tension of the bearing arrangement, having the first bearing, of the shaft (9) is adjusted by means of the nut (4).

6. A gear unit according to claims 5,
**characterised in that**
the bearing arrangement has a second bearing.

7. A gear unit according to any one of the preceding claims,
**characterised in that**
the annular spatial region is bounded by the first bearing, in particular by the inner ring (1), the rolling bodies and the outer ring of the first bearing, as well as by the nut (4), the disc (3), the spacer sleeve (2) and the cover (12).

8. A gear unit according to any one of the preceding claims,
**characterised in that**
an annular gap is formed between the nut (4) and the cover (12),
in particular wherein the nut (4) is connected to the shaft (9) in a rotationally-fixed manner.

9. A gear unit according to any one of the preceding claims,
**characterised in that**
a ring (5) is placed onto the shaft (9) and is connected to the shaft (9) in a force-locked manner, in particular is connected by being shrunk on thermally,
wherein the nut (4) is arranged axially, therefore in an axial direction, between the ring (5) and the first bearing.

10. A gear unit according to any one of the preceding claims,
**characterised in that**
connected to the ring (5), in particular by means of screws, there is a labyrinth disc (7), in particular the annular grooves of which, encircling in a circumferential direction and oriented coaxially with the rotational axis of the shaft (9), together with corresponding annular grooves, made in the cover (12), encircling in a circumferential direction and oriented coaxially with the rotational axis of the shaft (9), form a labyrinth gap.

11. A gear unit according to any one of the preceding claims,
**characterised in that**
a main chamber (10) and two chambers (11) spaced apart from the main chamber (10) are formed between the ring (5) and the cover (12),
wherein the main chamber (10) is arranged axially between the two chambers (11),
wherein an annular gap is formed between the ring (5) and the cover (12) and connects the main chamber (10) to the two chambers (11).

12. A gear unit according to any one of the preceding claims,
**characterised in that**
there is a protrusion on the ring (5), in particular a local maximum of the external diameter, dependent on the axial position, of the ring (5),
wherein the protrusion projects into the main chamber (10),
in particular wherein the axial region covered by the main chamber (10) comprises the axial region covered by the protrusion.

13. A gear unit according to any one of the preceding claims,
**characterised in that**
a laminar ring (8) is arranged between the labyrinth seal (6) and the ring (5), in particular in such a manner that the seal is constructed in layers,
and/or **in that**
the radial wall thickness of the nut (4) is greater than the radial wall thickness of the spacer sleeve (2).

14. A gear unit according to any one of the preceding claims,
**characterised in that**
the laminar ring (8), in particular consisting of three pieces, is arranged in an annular groove, encircling in a circumferential direction, of the labyrinth disc (7),
in particular wherein the radially outer surface of the laminar ring (8) contacts the cover (12).

15. A gear unit according to any one of claims 12 - 14,
**characterised in that**
at least one screw is guided through the labyrinth disc (7) and is screwed into a tapped bore of the ring (5),
wherein the region covered in an axial direction by the screw overlaps with the region covered in an axial direction by the main chamber (10),
in particular wherein the material of the screw has a lower density than the material of the ring (5),
in particular wherein the head of the screw presses the labyrinth disc (7) towards the cover (12).

## Revendications

1. Transmission comprenant un arbre (9), au moins un premier palier, une partie carter (15) et un couvercle (12),
dans laquelle l'arbre (9) est monté rotatif grâce au premier palier,
dans laquelle le premier palier présente une bague intérieure (1) qui est enfilée sur l'arbre (9), dans laquelle le couvercle (12) est relié à la partie carter (15),
dans laquelle l'arbre (9) présente une région filetée sur laquelle est vissé un écrou (4) qui ajuste la tension de palier,
dans laquelle une douille d'écartement (2) et une rondelle (3) sont agencées entre l'écrou (4) et la bague intérieure (1),
- dans laquelle le plus grand diamètre extérieur de la rondelle (3) est supérieur au plus grand diamètre extérieur de la douille d'écartement (2),
- dans laquelle la plus grande distance radiale de la rondelle (3) par rapport à l'axe de rotation de l'arbre (9) est supérieure à la plus grande distance radiale de la douille d'écartement (2) par rapport à l'axe de rotation de l'arbre (9),
dans laquelle
- la région de distance radiale par rapport à l'axe de rotation de l'arbre (9) qui est couverte par la rondelle (3) contient la région de distance radiale couverte par la douille d'écartement (2),
dans laquelle l'écrou (4) appuie sur la bague intérieure (1) par l'intermédiaire de la douille d'écartement (2), enfichée sur l'arbre (9) et agencée axialement entre la bague intérieure (1) du premier palier et l'écrou (4), et de la rondelle (3) également enfichée sur l'arbre (9) et agencée entre l'écrou (4) et la douille d'écartement (2),
dans laquelle la rondelle (3) fait saillie dans un espace annulaire qui est reliée par un canal à un espace intérieur de la transmission,
et **caractérisée en ce que** le canal comprend
- un premier espace délimité par le couvercle (12), une vis de vidange (16) et la partie carter (15),
- et un deuxième espace qui traverse la partie carter (15) et débouche d'une part dans l'espace intérieur de la transmission et d'autre part dans le premier espace,
dans laquelle ledit premier espace débouche dans l'espace annulaire.

2. Transmission selon la revendication 1,
**caractérisée en ce que**
la rondelle (3) est agencée axialement entre l'écrou (4) et la douille d'écartement (2).

3. Transmission selon l'une quelconque des revendications précédentes,
**caractérisée en ce que**
la douille d'écartement (2) est appliquée contre la bague intérieure (1) du premier palier.

4. Transmission selon l'une quelconque des revendications précédentes,
**caractérisée en ce que**
la douille d'écartement (2) est agencée axialement entre la rondelle (3) et la bague intérieure (1) du premier palier.

5. Transmission selon l'une quelconque des revendications précédentes,
**caractérisée en ce que**
la tension de palier de l'agencement de palier de l'arbre (9) présentant le premier palier est ajustée au moyen de l'écrou (4).

6. Transmission selon la revendication 5,
**caractérisée en ce que**
l'agencement de palier présente un deuxième palier.

7. Transmission selon l'une quelconque des revendications précédentes,
**caractérisée en ce que**
l'espace annulaire est délimité par le premier palier, en particulier par la bague intérieure (1), les organes de roulement et la bague extérieure du premier palier, ainsi que par l'écrou (4), la rondelle (3), la douille d'écartement (2) et le couvercle (12).

8. Transmission selon l'une quelconque des revendications précédentes,
**caractérisée en ce que**
un interstice annulaire est formé entre l'écrou (4) et le couvercle (12),
en particulier dans laquelle l'écrou (4) est relié de manière solidaire en rotation à l'arbre (9).

9. Transmission selon l'une quelconque des revendications précédentes,
**caractérisée en ce que**
une bague (5) est enfichée sur l'arbre (9) et est reliée par complémentarité de force à l'arbre (9), en particulier est reliée par emmanchage à chaud,
dans laquelle l'écrou (4) est agencé axialement, par conséquent dans la direction axiale, entre la bague (5) et le premier palier.

10. Transmission selon l'une quelconque des revendications précédentes,
**caractérisée en ce que**
une rondelle labyrinthe (7) est reliée, en particulier au moyen de vis, à la bague (5) dont les rainures annulaires circonférentielles, orientées de manière coaxiale par rapport à l'axe de rotation de l'arbre (9), ainsi que les rainures annulaires circonférentielles correspondantes formées au niveau du couvercle (12) et orientées de manière coaxiale par rapport à l'axe de rotation de l'arbre (9) forment en particulier un interstice à labyrinthe.

11. Transmission selon l'une quelconque des revendications précédentes,
**caractérisée en ce que**
une chambre principale (10) et deux chambres (11) espacées par rapport à la chambre principale (10) sont formées entre la bague (5) et le couvercle (12),
dans laquelle la chambre principale (10) est agencée axialement entre les deux chambres (11),
dans laquelle un interstice annulaire qui relie la chambre principale (10) aux deux chambres (11) est formé entre la bague (5) et le couvercle (12).

12. Transmission selon l'une quelconque des revendications précédentes,
**caractérisée en ce que**
une protubérance, en particulier un maximum local du diamètre extérieur de la bague (5) dépendant de la position axiale, est formée au niveau de la bague (5),
dans laquelle la protubérance fait saillie dans la chambre principale (10),
en particulier dans laquelle la région axiale couverte par la chambre principale (10) comprend la région axiale couverte par la protubérance.

13. Transmission selon l'une quelconque des revendications précédentes,
**caractérisée en ce que**
une bague laminaire (8) est agencée entre le joint labyrinthe (6) et la bague (5), en particulier de telle manière que le joint est constitué couche par couche,
et/ou **en ce que**
l'épaisseur de paroi radiale de l'écrou (4) est supérieure à l'épaisseur de paroi radiale de la douille d'écartement (2).

14. Transmission selon l'une quelconque des revendications précédentes,
**caractérisée en ce que**
la bague laminaire (8), constituée en particulier de trois pièces, est agencée dans une rainure annulaire circonférentielle de la rondelle de labyrinthe (7),
en particulier dans laquelle la surface radialement extérieure de la bague laminaire (8) est en contact avec le couvercle (12).

15. Transmission selon l'une quelconque des revendications 12 à 14,
**caractérisée en ce que**
au moins une vis est guidée à travers la rondelle labyrinthe (7) et est vissée dans un alésage fileté de la bague (5),
dans laquelle la région couverte par la vis dans la direction axiale chevauche la région couverte par la chambre principale (10) dans la direction axiale,
en particulier dans laquelle le matériau de la vis présente une densité inférieure à celle du matériau de la bague (5),
en particulier dans laquelle la tête de la vis pousse la rondelle labyrinthe (7) vers le couvercle (12).
